# FASCICULE DE BREVET EUROPEEN

(11) **EP 2 882 530 B1**
(45) Date de publication et mention de la délivrance du brevet: **30.11.2016**
(21) Numéro de dépôt: 13762163.7
(22) Date de dépôt: 09.08.2013
(51) Int. Cl.: B01J 37/03, B01J 23/46, B01J 35/04, C02F 1/78

(54) **CATALYSEUR SOLIDE POUR OZONATION CATALYTIQUE DE COMPOSES ORGANIQUES EN MILIEU AQUEUX**
FESTSTOFFKATALYSATOR ZUR KATALYTISCHEN OZONIERUNG ORGANISCHER VERBINDUNGEN IN EINEM WÄSSRIGEN MEDIUM
SOLID CATALYST FOR CATALYTIC OZONATION OF ORGANIC COMPOUNDS IN AN AQUEOUS MEDIUM

(30) Priorité: 10.08.2012 FR 1257768
(43) Date de publication de la demande: 17.06.2015
(73) Titulaire: Technavox, 86022 Poitiers Cedex (FR); Serep, 76067 Le Havre (FR); C.N.R.S. Mission des Relations avec Les Entreprises, 75794 Paris Cedex 16 (FR); Université De Poitiers, 86034 Poitiers Cedex (FR)
(72) Inventeur: PONTLEVOY, Florence, F-86000 Poitiers (FR); AUDIRAC, Aude, F-11430 Gruissan (FR); KARPEL VEL LEITNER, Nathalie, F-86220 Vouneuil Sur Vienne (FR); VASSE, Jean Charles, F-76280 Saint Jouin Bruneval (FR); DELIANE, Florent, F-33300 Bordeaux (FR)
(74) Mandataire: Ipside
(86) Numéro de dépôt international: PCT/FR2013/051921
(87) Numéro de publication internationale: WO 2014/023922

(56) Documents cités:
- EP-A1- 0 727 243
- WO-A1-03/064333
- FR-A1- 2 780 053
- US-A1- 2012 087 853

## Description

La présente invention se rapporte à un catalyseur solide pour l'ozonation catalytique, et à un procédé de fabrication dudit catalyseur.

La présente invention se rapporte également à un procédé de traitement d'effluents par ozonation catalytique en présence dudit catalyseur solide, en vue de réduire la teneur en polluants organiques.

De très nombreux procédés industriels génèrent des eaux usées, ou effluents, qui contiennent un taux significatif de polluants organiques. La demande chimique en oxygène, ou DCO est la consommation en dioxygène nécessaire à l'oxydation de ces polluants organiques. La DCO permet d'évaluer la charge polluante des eaux usées.

De nombreuses technologies existent pour le traitement des eaux industrielles (procédés physico-chimiques, membranes, évaporateur sous vide, biologiques) avec souvent des difficultés pour réduire cette DCO. Le traitement sur charbon actif, ainsi que des procédés d'oxydation connus, sont des solutions envisageables mais avec de fortes contraintes associées, notamment des coûts d'exploitation importants.

Les procédés biologiques sont, quant à eux, souvent limités par la toxicité ou le caractère réfractaire des matières organiques à éliminer.

Il est connu un procédé efficace de traitement des effluents par ozonation catalytique. L'ozone, outre un effet biocide reconnu, a un pouvoir oxydant plus puissant que d'autres oxydants chimiques tels que le peroxyde d'hydrogène ou le permanganate de potassium.

En particulier, le document WO03/064333 se rapporte au traitement par ozonation d'effluents contenant des polluants organiques, en présence d'un catalyseur poudre constitué d'une phase active de ruthénium et/ou d'iridium déposée sur un véhicule formé d'un oxyde métallique.

- Un tel procédé permet une transformation totale en CO₂ du carbone des polluants organiques, ou encore une dégradation partielle qui rend le carbone organique biodégradable. Un tel procédé présente de nombreux avantages, tels que le traitement efficace des effluents sans générer de boues. De plus, il permet la minéralisation des polluants organiques même classiquement réfractaires aux oxydants.

L'utilisation d'un catalyseur poudre présente néanmoins des contraintes, comme celle de devoir séparer le catalyseur et l'eau purifiée en fin de traitement. Par ailleurs, l'utilisation du catalyseur poudre est incompatible avec certains effluents, notamment ceux qui contiennent des matières colmatantes ou des particules en suspension.

Afin de résoudre ces problèmes, la mise au point d'un catalyseur solide pour le traitement des effluents par ozonation catalytique a été tentée. Cependant, il s'est avéré difficile de fixer efficacement un tel catalyseur sur un support tout en maintenant la cinétique et le rendement de la réaction d'ozonation.

La présente invention offre une solution satisfaisante à ces problèmes. En effet, elle permet l'obtention d'un catalyseur sur support solide et son utilisation dans l'ozonation d'effluents contenant des polluants organiques.

Outre la simplification du procédé lié au passage d'un catalyseur poudre à un catalyseur supporté, le catalyseur selon la présente invention a permis d'obtenir de meilleurs rendements d'ozonation que le procédé décrit dans le document WO03/064333, avec des concentrations en ozone plus faibles.

La présente invention se rapporte donc à un procédé de fabrication d'un catalyseur solide pour l'ozonation d'un effluent contenant des polluants organiques, ledit procédé comprenant le dépôt d'un catalyseur en poudre sur un support en mousse à cellules ouvertes, ladite poudre étant formée de grains comprenant une phase active déposée sur un véhicule, la phase active comprenant du ruthénium et/ou de l'iridium, le véhicule étant formé d'un oxyde choisi parmi l'oxyde de cérium, l'oxyde de zirconium, l'oxyde de titane et leurs mélanges, le catalyseur en poudre étant solidarisé au support en mousse au moyen d'un liant sol-gel.

De préférence, le support en mousse à cellules ouvertes est formé d'une mousse métallique ou céramique. D'autres matériaux, tels que les matériaux composites ou les plastiques, peuvent cependant être utilisés. Le choix du matériau du support en mousse est notamment baisé sur des critères de surface spécifique, d'adhérence au catalyseur, ainsi que de résistance à l'ozone et à l'eau.

Selon une forme préférentielle de l'invention, la surface spécifique du support en mousse à cellules ouvertes est comprise entre 500 et 5600 m²/m³, plus préférentiellement entre 1000 et 3000 m²/m³. Encore plus préférentiellement, la surface spécifique est d'environ 2000 m²/m³.

Selon une forme préférentielle de l'invention, la granulométrie du catalyseur en poudre est comprise entre 1 µm et 200 µm.

Selon une forme préférentielle de l'invention, le support est en mousse métallique et comprend un métal choisi parmi le nickel, le chrome, l'aluminium, les alliages nickel-chrome et les alliages nickel-chrome-aluminium. On peut par exemple utiliser de l'acier inoxydable, enrichi en chrome et éventuellement en nickel et/ou en molybdène.

De telles mousses métalliques ont de préférence une densité comprise entre 0,40 et 1,33 g/cm³. Préférentiellement, leur porosité est comprise entre 0,4 et 2,3 nm.

Selon une autre forme préférentielle de l'invention, le support est en mousse céramique et comprend un matériau choisi parmi la zircone, l'alumine, la mullite et leurs mélanges. Préférentiellement, la porosité de ces mousses est comprise entre 0,4 et 2,3 nm.

Selon une forme préférentielle de l'invention, le dépôt et la solidarisation du catalyseur en poudre sur le support en mousse à cellules ouvertes se fait par une technique de trempage-tirage, ou *dip coating.* Plus préférentiellement, le procédé comprend successivement les étapes suivantes : préparation du liant sol-gel en phase liquide ; ajout du catalyseur en poudre au liant sol-gel en phase liquide; dépôt de la solution de catalyseur ainsi formée sur le support en mousse à cellules ouvertes par trempage-tirage ; cuisson du support en mousse afin de solidifier le liant sol-gel.

La présente invention se rapporte également à un catalyseur solide sur support en mousse à cellules ouvertes, pour l'ozonation d'un effluent contenant des polluants organiques, ledit catalyseur étant issu d'un procédé de fabrication tel que décrit ci-dessus, ou pouvant être issu d'un tel procédé.

La présente invention se rapporte en outre à un procédé pour le traitement d'un effluent contenant des polluants organiques, ledit procédé comprenant l'ozonation dudit effluent en présence d'un catalyseur solide sur support en mousse à cellules ouvertes tel que décrit ci-dessus.

Par « effluent», on entend tous les types d'eaux usées contenant des polluants organiques, telles que les effluents industriels mais aussi les eaux domestiques, les eaux de piscine, les eaux de sortie de station urbaine ou les eaux de circuits de refroidissement pour recyclage.

De manière préférentielle, un tel procédé de traitement comprend les étapes suivantes : une étape de mise en solution d'ozone gazeux dans l'effluent à traiter, puis une étape de mise en contact dudit effluent concentré en ozone avec le catalyseur solide sur support en mousse.

La présente invention se rapporte également à une installation pour la mise en oeuvre d'un procédé tel que décrit ci-dessus, ladite installation comprenant : un dispositif de production d'ozone ; un dispositif de transfert de l'ozone gazeux dans l'effluent à traiter ; un réacteur de mise en contact dudit effluent avec le catalyseur solide sur support en mousse à cellules ouvertes.

Selon un mode de réalisation de l'invention, une telle installation comporte plusieurs réacteurs garnis de catalyseur solide, ces réacteurs étant disposés en série et/ou en parallèle sur un trajet de l'effluent.

De manière préférentielle, un réacteur de mise en contact de l'effluent avec le catalyseur solide comprend une colonne garnie de support en mousse à cellules ouvertes, une partie de la mousse située en entrée de colonne étant dépourvue de catalyseur.

La partie de mousse dépourvue de catalyseur a notamment une fonction de mélangeur statique. L'ozone est préférentiellement injectée au niveau de cette partie et se dissout dans l'effluent avant la mise en contact avec le catalyseur solide.

De la même manière, un autre objet de la présente invention est une colonne pour ozonation d'un effluent contenant des polluants organiques, ladite colonne étant garnie de catalyseur solide sur support en mousse à cellules ouvertes tel que décrit précédemment, une partie de ladite colonne située en entrée étant par ailleurs garnie de support en mousse dépourvu de catalyseur. Une telle colonne peut équiper une installation telle que décrite ci-dessus, en tant que réacteur de mise en contact de l'effluent avec le catalyseur solide.

Les exemples suivants illustrent l'invention sans toutefois limiter sa portée :

### Exemple 1 : Fabrication d'un catalyseur solide par fixation d'un catalyseur poudre sur un support en mousse à cellules ouvertes par procédé sol-gel

Dans les exemples suivants, on utilise un catalyseur poudre comprenant une phase active de ruthénium déposée sur un véhicule d'oxyde de cérium (catalyseur Ru/CeO₂). Un tel catalyseur est décrit dans le document WO03/064333. Avantageusement, on utilise le catalyseur commercialisé par la société TECHNAVOX sous la dénomination TAO3.

### Exemple 1.1 : Catalyseur n°1

5 g de 3-glycidoxypropyltrimethoxysilane (Glymo) sont mélangés à 5 mL d'acide chlorhydrique 0,1 N. Le mélange est agité 1 h à température ambiante. 10 mL d'éthanol sont ensuite ajoutés. Le catalyseur poudre est ajouté de manière à obtenir une concentration de 10% en masse sur l'extrait sec de la solution. L'agitation est maintenue 30 minutes à température ambiante.

La solution est ensuite déposée sur une mousse en inox par trempage-tirage avec une vitesse de retrait de 10 mm par minute. La mousse est ensuite chauffée 1 heure à 100 °C.

### Exemple 1.2 : Catalyseur n°2

5 g de Glymo sont mélangés à 5 mL d'acide chlorhydrique 0,1 N. Le premier mélange est agité 1 h à température ambiante. Par ailleurs, 5 g de tétraéthoxysilane (TEOS) sont mélangés à 6 mL d'acide chlorhydrique 0,1 N. Le second mélange est agité 1 h à température ambiante.

Les premier et second mélanges sont réunis et 6 mL d'éthanol sont ajoutés. Le catalyseur poudre est ajouté de manière à obtenir une concentration de 10% en masse sur l'extrait sec de la solution. L'agitation est maintenue 30 minutes à température ambiante.

La solution est ensuite déposée sur une mousse en inox par trempage-tirage avec une vitesse de retrait de 10 mm par minute. La mousse est ensuite chauffée 1 heure à 100 °C.

### Exemple 1.3 : Catalyseur n°3

5 g de Glymo sont mélangés à 5 mL d'acide chlorhydrique 0,1 N. Le premier mélange est agité 1 h à température ambiante. Par ailleurs, 5 g de TEOS sont mélangés à 6 mL d'acide chlorhydrique 0,1 N. Le second mélange est agité 1 h à température ambiante.

Les premier et second mélanges sont réunis. 6 mL d'éthanol et 1 g de polyéthylène glycol (PEG) sont ajoutés. L'agitation est maintenue 30 minutes à température ambiante. Le catalyseur poudre est ajouté de manière à obtenir une concentration de 10% en masse sur l'extrait sec de la solution.

La solution est ensuite déposée sur une mousse en inox par trempage-tirage avec une vitesse de retrait de 10 mm par minute. La mousse est ensuite chauffée 1 heure à 100 °C.

### Exemple 1.4 : Catalyseur n °4

5 g de Glymo sont mélangés à 5 mL d'acide chlorhydrique 0,1 N. Le premier mélange est agité 1 h à température ambiante. Par ailleurs, 5 g de TEOS sont mélangés à 6 mL d'acide chlorhydrique 0,1 N. Le second mélange est agité 1 h à température ambiante.

Les premier et second mélanges sont réunis. 6 mL d'éthanol et 0,5 g de cérium sont ajoutés. L'agitation est maintenue 30 minutes à température ambiante. Le catalyseur poudre est ajouté de manière à obtenir une concentration de 10% en masse sur l'extrait sec de la solution.

La solution est ensuite déposée sur une mousse en inox par trempage-tirage avec une vitesse de retrait de 10 mm par minute. La mousse est ensuite chauffée 1 heure à 100 °C.

### Exemple 1.5 : Catalyseur n °5

5 g de Glymo sont mélangés à 5 mL d'acide chlorhydrique 0,1 N. Le premier mélange est agité 1 h à température ambiante. Par ailleurs, 5 g de TEOS sont mélangés à 6 mL d'acide chlorhydrique 0,1 N. Le second mélange est agité 1 h à température ambiante.

Les premier et second mélanges sont réunis. 6 mL d'éthanol, 1 g de PEG et 0,5 g de cérium sont ajoutés. L'agitation est maintenue 30 minutes à température ambiante. Le catalyseur poudre est ajouté de manière à obtenir une concentration de 10% en masse sur l'extrait sec de la solution.

La solution est ensuite déposée sur une mousse en inox par trempage-tirage avec une vitesse de retrait de 10 mm par minute. La mousse est ensuite chauffée 1 heure à 100 °C.

### Exemple 1.6 : Catalyseur n°6

5 g de Glymo sont mélangés à 5 mL d'acide chlorhydrique 0,1 N. Le premier mélange est agité 1 h à température ambiante. Par ailleurs, 5 g de TEOS sont mélangés à 6 mL d'acide chlorhydrique 0,1 N. Le second mélange est agité 1 h à température ambiante.

Les premier et second mélanges sont réunis. 6 mL d'éthanol et 1,5 g de cérium sont ajoutés. L'agitation est maintenue 30 minutes à température ambiante. Le catalyseur poudre est ajouté de manière à obtenir une concentration de 10% en masse sur l'extrait sec de la solution.

La solution est ensuite déposée sur une mousse céramique silico-alumineuse par trempage-tirage avec une vitesse de retrait de 20 mm par minute. La mousse est ensuite chauffée 1 heure à 100 °C.

Les proportions utilisées dans les exemples ci-dessus peuvent être modifiées de sorte à faire varier de la manière suivante les concentrations massiques des différents composés dans l'extrait sec des solutions sol-get :
- la concentration en catalyseur poudre peut varier de 5 à 50% ;
- la concentration en Glymo peut varier de 8 à 70% ;
- la concentration en TEOS peut varier de 5 à 50% ;
- la concentration en cérium peut varier de 1 à 15% ;
- la concentration en PEG peut varier de 1 à 15%.

Par ailleurs, la vitesse de retrait de l'échantillon lors du dépôt du catalyseur par trempage-tirage peut varier de 1 à 200 mm par minute.

L'éthanol peut être remplacé par d'autres solvants organiques, par exemple le DOWANOL™ PMA (*Propylene Glycol Methyl Ether Acetate).*

### Exemple 2 : Traitement d'un effluent par ozonation - comparaison des résultats obtenus en présence du catalyseur poudre et du catalyseur sur support en mousse

### Exemple 2.1 - réacteur batch

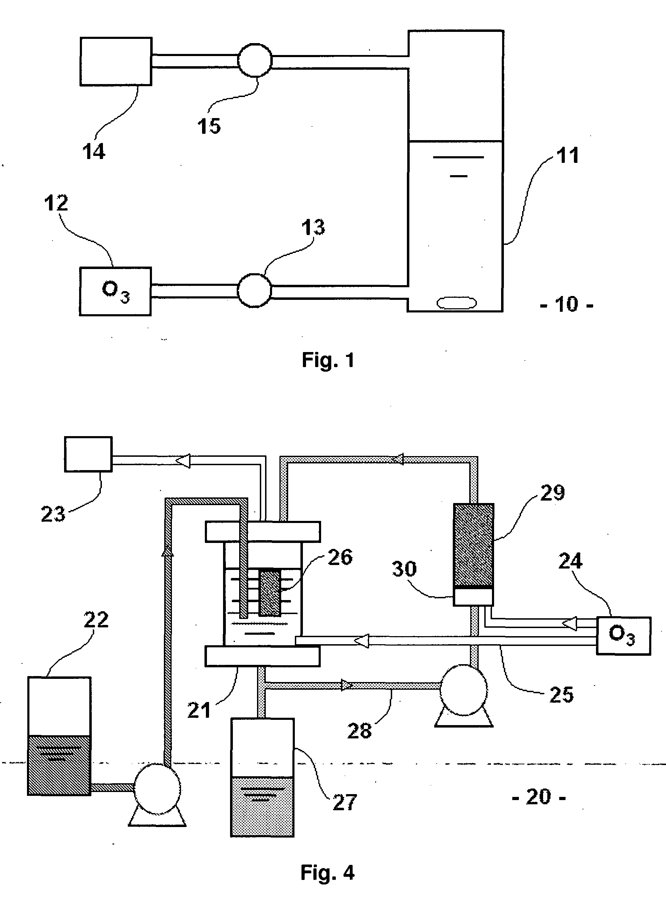

La figure 1 représente une vue schématique d'une installation pour le traitement d'effluents par ozonation, selon un mode de réalisation de l'invention.

L'installation 10 comprend un réacteur 11 en verre borosilicaté de 1,25 L avec agitateur magnétique. Une entrée du réacteur 11 est reliée à un ozoneur 12, par l'intermédiaire d'un premier débitmètre 13. Une sortie du réacteur 11 est reliée à un destructeur 14 d'ozone, par l'intermédiaire d'un second débitmètre 15.

En entrée du réacteur 11, l'ozone est introduit par une crépine d'HPLC qui permet une diffusion par bulles de 2 à 3 µm de diamètre. La vitesse de rotation de l'agitateur magnétique est de 500 tours par minute.

### - Traitement d'une molécule modèle

1 L d'une solution d'acide succinique à 1 mM dans de l'eau osmosée est versé dans le réacteur 11.
Expérience 1 : on réalise l'ozonation de cette solution en présence du catalyseur Ru/CeO₂ en poudre, à raison de 1 g de catalyseur poudre par litre de solution.
Expérience 2: on réalise l'ozonation d'une solution identique en présence du catalyseur sur support en mousse métallique n °4, tel que décrit à l'exemple 1.4 ci-dessus, à raison de 0,6 g d'équivalent catalyseur poudre par litre de solution.
Expérience 3: on réalise l'ozonation d'une solution identique en présence du catalyseur sur support en mousse céramique n °6, tel que décrit à l'exemple 1.6 ci-dessus, à raison de 0,6 g d'équivalent catalyseur poudre par litre de solution.

Dans les expériences 2 et 3, la quantité de catalyseur est donc égale à 60% de la quantité utilisée dans l'expérience 1.

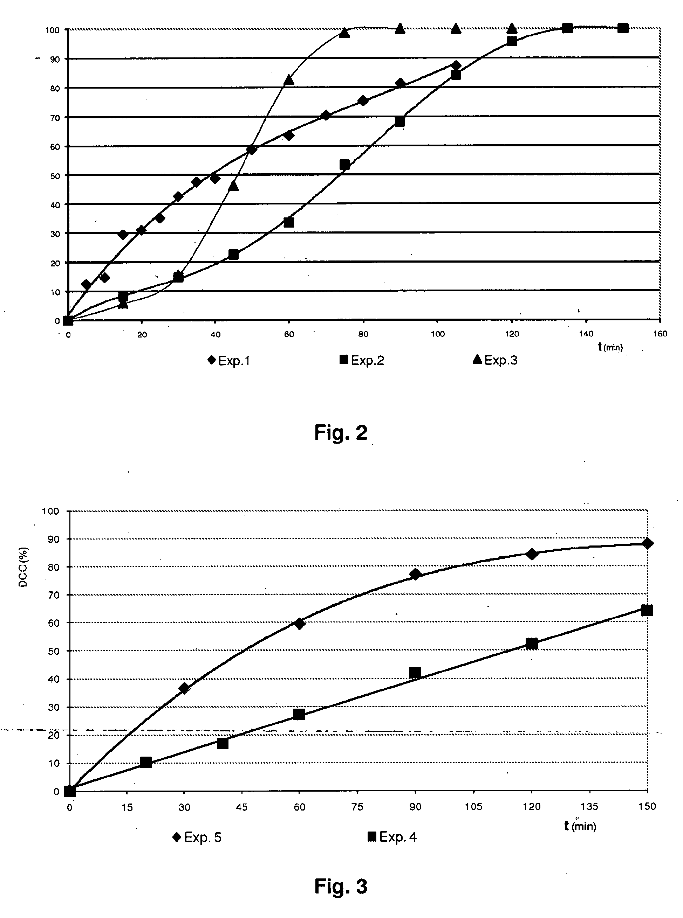

La figure 2 montre un graphique représentant l'évolution de l'élimination de l'acide succinique au cours du temps pour chacune des expériences 1, 2 et 3.

On constate qu'au bout de 50 minutes environ, le pourcentage d'acide succinique ayant réagi dans l'expérience 3 (catalyseur mousse céramique) dépasse celui de l'expérience 1 (catalyseur poudre).

Le pourcentage d'acide succinique ayant réagi dans l'expérience 2 (catalyseur mousse inox) dépasse celui de l'expérience 1 (catalyseur poudre) au bout de 110 minutes environ.

Par ailleurs, il est constaté que l'expérience 1 consomme 40 moles d'O₃ par mole d'acide succinique éliminé, tandis que les consommations pour les expériences 2 et 3 sont respectivement de 17 et de 21 moles d'O₃ par mole d'acide succinique éliminé.

En réacteur batch, l'ozonation de l'acide succinique est donc aussi rapide, voire plus rapide avec les catalyseurs supportés qu'avec le catalyseur poudre. Par ailleurs, ce résultat est obtenu par les catalyseurs supportés en présence de 40% en moins de catalyseur, et pour une consommation d'ozone environ deux fois moindre.

### - Traitement d'un effluent industriel

On utilise un effluent d'une industrie de production énergétique. Coloré et odorant, sa DCO initiale est de 3400 mg/L.

1 L de cet effluent industriel est versé dans le réacteur 11.
Expérience 4 : on réalise l'ozonation de cette solution en présence du catalyseur Ru/CeO₂ en poudre, à raison de 1 g de catalyseur poudre par litre de solution.
Expérience 5 : on réalise l'ozonation d'une solution identique en présence du catalyseur sur support en mousse céramique n°6, tel que décrit à l'exemple 1.6 ci-dessus, à raison de 0,6 g d'équivalent catalyseur poudre par litre de solution.

Dans l'expérience 5, la quantité de catalyseur est donc égale à 60% de la quantité utilisée dans l'expérience 4.

La figure 3 montre un graphique représentant l'évolution de la DCO au cours du temps pour chacune des expériences 4 et 5.

On constate que la diminution de la DCO est plus rapide dans le cas du catalyseur sur mousse céramique (expérience 5) que dans le cas du catalyseur poudre (expérience 4). En particulier, au bout de 150 minutes, 90% de la DCO a été éliminée dans l'expérience 5 tandis que 65% seulement de la DCO a été éliminée dans l'expérience 4.

### Exemple 2.2 - traitement continu

La figure 4 représente une vue schématique d'une installation 20 pour le traitement d'effluents par ozonation, selon un autre mode de réalisation de l'invention que celui de la figure 1. L'installation 20 permet le traitement d'effluents en continu. Un flux de l'effluent entre dans l'installation 20 et en ressort traité, au même débit.

L'installation 20 comprend une colonne 21 à bulles. Une extrémité supérieure de la colonne est reliée à une cuve 22 d'alimentation en effluent à traiter. Ladite extrémité supérieure est également reliée à un destructeur 23 d'ozone. L'installation 20 comprend en outre un ozoneur 24.

L'installation 20 permet de mettre en oeuvre le traitement d'un effluent par un procédé selon un premier mode de réalisation de l'invention.

Selon ce premier procédé (ci-après procédé 1), l'ozone est injecté en bas de la colonne 21 par un conduit 25. Une colonne 26 de catalyseur supporté sur mousse est placée à l'intérieur de la colonne 21 à bulles.

L'effluent traité sort en bas de la colonne à bulles. Il peut être transféré dans un bac 27 de récupération, ou encore réinjecté en haut de la colonne 21 à bulles par une boucle 28 de recirculation.

L'installation 20 permet également le traitement d'un effluent par un procédé selon un deuxième mode de réalisation de l'invention.

Selon ce deuxième procédé (ci-après procédé 2), l'ozone est injecté en bas de la colonne 21 par le conduit 25. Le catalyseur supporté sur mousse n'est pas placé à l'intérieur de la colonne 21 à bulles mais sur une colonne 29 située sur la boucle 28 de recirculation de l'effluent. L'ozone est solubilisé dans l'effluent avant le passage au contact du catalyseur.

L'installation 20 permet également le traitement d'un effluent par un procédé selon un troisième mode de réalisation de l'invention.

Selon ce troisième procédé (ci-après procédé 3), le catalyseur supporté sur mousse n'est pas placé à l'intérieur de la colonne 21 mais sur la colonne 29 de la boucle 28. L'ozone n'est pas injecté en bas de la colonne 21 mais au niveau d'un mélangeur statique 30, situé en entrée de la colonne 29.

Selon un mode particulier de réalisation de l'invention, la colonne 29 est garnie de mousse à cellules ouvertes dont une partie est greffée par du catalyseur tel que décrit précédemment. Une partie de la mousse située en entrée de ladite colonne n'est pas greffée, cette partie de mousse non greffée formant le mélangeur statique 30.

Selon une variante de mise en oeuvre des procédés 2 et 3, l'installation 20 peut comporter plusieurs colonnes 29, par exemple deux colonnes disposées en série ou en parallèle, sur la boucle 28 de recirculation. Dans ce cas, il est préférable d'effectuer une injection d'ozone en entrée de chacune des colonnes.

### - Traitement d'une molécule modèle

L'ozonation catalytique d'une solution d'acide succinique à 1 mM a été réalisée selon les procédés 1, 2 et 3.

Dans chacun des trois procédés, le temps de contact avec le catalyseur est fixé à 90 minutes.

Le catalyseur utilisé sur les colonnes 26 ou 29 est le catalyseur sur support en mousse inox utilisé à l'expérience 2 de l'exemple 2.1 ci-dessus, à raison de 0,06 g d'équivalent catalyseur poudre par litre de solution. Cette concentration est 10 fois inférieure à celle utilisée pour le traitement batch décrit à l'exemple 2.1 ci-dessus.

Le procédé 1 permet d'éliminer 83% de l'acide succinique avec une consommation d'ozone de 14 moles par môle d'acide succinique éliminée.

Le procédé 2 permet d'éliminer 72% de l'acide succinique avec une consommation d'ozone de 6 moles par mole d'acide succinique éliminée.

Le procédé 3 permet d'éliminer 65% de l'acide succinique avec une consommation d'ozone de 11 moles par mole d'acide succinique éliminée.

A titre de comparaison, en 90 minutes, le procédé batch décrit à l'exemple 2.1 (expérience 2) permet d'éliminer 68% de l'acide succinique avec une consommation d'ozone de 17 moles par mole d'acide succinique éliminée.

Les procédés 1, 2 et 3 en continu permettent donc d'obtenir des résultats analogues à ceux du procédé batch, voire de meilleurs résultats, et avec une moindre consommation d'ozone et une quantité de catalyseur moindre.

## Revendications

1. Procédé de fabrication d'un catalyseur solide pour l'ozonation d'un effluent contenant des polluants organiques, ledit procédé comprenant le dépôt d'un catalyseur en poudre sur un support en mousse à cellules ouvertes,
ladite poudre étant formée de grains comprenant une phase active déposée sur un véhicule,
la phase active comprenant du ruthénium et/ou de l'iridium,
le véhicule étant formé d'un oxyde choisi parmi l'oxyde de cérium, l'oxyde de zirconium, l'oxyde de titane et leurs mélanges,
le catalyseur en poudre étant solidarisé au support en mousse au moyen d'un liant sol-gel.

2. Procédé selon la revendication 1, tel que le support est en mousse métallique et comprend un métal choisi parmi le nickel, le chrome, l'aluminium, les alliages nickel-chrome et les alliages nickel-chrome-aluminium.

3. Procédé selon la revendication 1, tel que le support est en mousse céramique et comprend un matériau choisi parmi la zircone, l'alumine, la mullite et leurs mélanges.

4. Procédé selon l'une des revendications précédentes, comprenant successivement les étapes suivantes :
- préparation du liant sol-gel en phase liquide ;
- ajout du catalyseur en poudre au liant sol-gel en phase liquide ;
- dépôt de la solution de catalyseur ainsi formée sur le support en mousse à cellules ouvertes par trempage-tirage ;
- cuisson du support en mousse afin de solidifier le liant sol-gel.

5. Catalyseur solide sur support en mousse à cellules ouvertes, pour l'ozonation d'un effluent contenant des polluants organiques, ledit catalyseur pouvant être issu d'un procédé de fabrication selon l'une des revendications précédentes.

6. Procédé pour le traitement d'un effluent contenant des polluants organiques, ledit procédé comprenant l'ozonation dudit effluent en présence d'un catalyseur solide sur support en mousse à cellules ouvertes selon la revendication 5.

7. Procédé selon la revendication 6, comprenant :
- une étape de mise en solution d'ozone gazeux dans l'effluent à traiter,
- une étape de mise en contact dudit effluent concentré en ozone avec le catalyseur solide sur support en mousse.

8. Installation (10, 20) pour la mise en oeuvre d'un procédé selon l'une des revendications 6 à 7, ladite installation comprenant :
- un dispositif (12, 24) de production d'ozone ;
- un dispositif (25, 30) de transfert de l'ozone gazeux dans l'effluent à traiter ;
- un réacteur (11, 26, 29) de mise en contact dudit effluent avec un catalyseur solide sur support en mousse à cellules ouvertes selon la revendication 5.

9. Installation selon la revendication 8, telle que le réacteur de mise en contact de l'effluent avec le catalyseur comprend une colonne (29) garnie de support en mousse à cellules ouvertes, une partie (30) de la mousse située en entrée de colonne étant dépourvue de catalyseur.

10. Colonne (29) pour ozonation d'un effluent contenant des polluants organiques, ladite colonne étant garnie de catalyseur solide sur support en mousse à cellules ouvertes selon la revendication 5, une partie (30) de ladite colonne située en entrée étant par ailleurs garnie de support en mousse dépourvu de catalyseur.

## Patentansprüche

1. Verfahren zur Herstellung eines festen Katalysators zur Ozonisierung eines organische Schadstoffe enthaltenden Austragsstroms, wobei das Verfahren die Abscheidung eines pulverförmigen Katalysators auf einem Träger aus offenzelligem Schaum umfasst,
wobei das Pulver aus Körnern, die eine auf einem Vehikel abgeschiedene aktive Phase umfassen, gebildet ist,
wobei die aktive Phase Ruthenium und/oder Iridium umfasst,
wobei das Vehikel aus einem Oxid, das aus Ceroxid, Zirconiumoxid, Titanoxid und Mischungen davon ausgewählt ist, gebildet ist,
wobei der pulverförmige Katalysator mit Hilfe eines Sol-Gel-Bindemittels an den Schaumträger gebunden wird.

2. Verfahren nach Anspruch 1, wobei der Träger ein Metallschaum ist und ein Metall, das aus Nickel, Chrom, Aluminium, Nickel-Chrom-Legierungen und Nickel-Chrom-Aluminium-Legierungen ausgewählt ist, umfasst.

3. Verfahren nach Anspruch 1, wobei der Träger ein Keramikschaum ist und ein Material, das aus Zirconiumoxid, Aluminiumoxid, Mullit und Mischungen davon ausgewählt ist, umfasst.

4. Verfahren nach einem der vorhergehenden Ansprüche, das nacheinander die folgenden Schritte umfasst:
- Herstellen des Sol-Gel-Bindemittels in flüssiger Phase;
- Zugeben des pulverförmigen Katalysators zu dem Sol-Gel-Bindemittel in flüssiger Phase;
- Abscheiden der so gebildeten Katalysatorlösung auf dem Träger aus offenzelligem Schaum durch Tauchbeschichten;
- Brennen das Schaumträgers zur Verfestigung des Sol-Gel-Bindemittels.

5. Fester Katalysator auf einem Träger aus offenzelligem Schaum zur Ozonisierung eines organische Schadstoffe enthaltenden Austragsstroms, wobei der Katalysator aus einem Herstellungsverfahren nach einem der vorhergehenden Ansprüche stammen kann.

6. Verfahren zur Behandlung eines organische Schadstoffe enthaltenden Austragsstroms, bei dem man den Austragsstrom in Gegenwart eines festen Katalysators auf einem Träger aus offenzelligem Schaum nach Anspruch 5 ozonisiert.

7. Verfahren nach Anspruch 6, umfassend:
- einen Schritt des Lösens von gasförmigem Ozon in dem zu behandelnden Austragsstrom,
- einen Schritt des Inberührungbringens des mit Ozon angereicherten Austragsstroms mit dem festen Katalysator auf einem Schaumträger.

8. Anlage (10, 20) zur Durchführung eines Verfahrens nach einem der Ansprüche 6 bis 7, wobei die Anlage Folgendes umfasst:
- eine Vorrichtung (12, 24) zur Produktion von Ozon;
- eine Vorrichtung (25, 30) zur Überführung des gasförmigen Ozons in den zu behandelnden Austragsstrom;
- einen Reaktor (11, 26, 29) zum Inberührungbringen des Austragsstroms mit einem festen Katalysator auf einem Träger aus offenzelligem Schaum nach Anspruch 5.

9. Anlage nach Anspruch 6, wobei der Reaktor zum Inberührungbringen des Austragsstroms mit dem Katalysator eine mit Träger aus offenzelligem Schaum gepackte Säule (29) umfasst, wobei ein Teil (30) des Schaums, der sich am Säuleneingang befindet, frei von Katalysator ist.

10. Säule (29) zur Ozonisierung eines organische Schadstoffe enthaltenden Austragsstroms, wobei die Säule mit festem Katalysator auf einem Träger aus offenzelligem Schaum nach Anspruch 5 gepackt ist, wobei ein Teil (30) der Säule, der sich am Eingang befindet, darüber hinaus mit katalysatorfreiem Schaumträger gepackt ist.

## Claims

1. Process for manufacturing a solid catalyst for the ozonation of an effluent containing organic pollutants, said process comprising the deposition of a catalyst in the form of a powder on an open-cell foam support, said powder being formed of grains comprising an active phase deposited on a carrier,
the active phase comprising ruthenium and/or iridium, the carrier being formed of an oxide selected from cerium oxide, zirconium oxide, titanium oxide and mixtures thereof,
the powdered catalyst being attached to the foam support by means of a sol-gel binder.

2. Process according to Claim 1, wherein the support is made of metal foam and comprises a metal selected from nickel, chromium, aluminum, nickel-chromium alloys and nickel-chromium-aluminum alloys.

3. Process according to Claim 1, wherein the support is made of ceramic foam and comprises a material selected from zirconia, alumina, mullite and mixtures thereof.

4. Process according to one of the preceding claims, successively comprising the following steps:
- preparation of the sol-gel binder in liquid phase;
- addition of the powdered catalyst to the sol-gel binder in liquid phase;
- deposition of the catalyst solution thus formed on the open-cell foam support by dip coating;
- curing of the foam support in order to solidify the sol-gel binder.

5. Solid catalyst on an open-cell foam support, for the ozonation of an effluent containing organic pollutants, said catalyst being obtainable by a manufacturing process according to one of the preceding claims.

6. Process for the treatment of an effluent containing organic pollutants, said process comprising the ozonation of said effluent in the presence of a solid catalyst on an open-cell foam support according to Claim 5.

7. Process according to Claim 6, comprising:
- a step of dissolving gaseous ozone in the effluent to be treated,
- a step of bringing said ozone-concentrated effluent into contact with the solid catalyst on a foam support.

8. Plant (10, 20) for the implementation of a process according to one of Claims 6 to 7, said plant comprising:
- a device (12, 24) for producing ozone;
- a device (25, 30) for transferring gaseous ozone into the effluent to be treated,
- a reactor (11, 26, 29) for bringing said effluent into contact with a solid catalyst on an open-cell foam support according to Claim 5.

9. Plant according to Claim 8, wherein the reactor for bringing the effluent into contact with the catalyst comprises a column (29) packed with open-cell foam support, a portion (30) of the foam located at the column inlet being devoid of catalyst.

10. Column (29) for ozonation of an effluent containing organic pollutants, said column being packed with solid catalyst on an open-cell foam support according to Claim 5, a portion (30) of said column located at the inlet being packed with foam support devoid of catalyst.
